# EUROPÄISCHE PATENTSCHRIFT

(11) **EP 1 300 324 B1**
(45) Veröffentlichungstag und Bekanntmachung des Hinweises auf die Patenterteilung: **10.11.2004**
(21) Anmeldenummer: 02017892.7
(22) Anmeldetag: 09.08.2002
(51) Int. Cl.: B62D 25/16

(54) **Radhausschale mit Spritzwasserschutz**
Wheel housing with spray protection
Panneau de couverture de roue avec garde-boue anti-projections

(30) Priorität: 05.10.2001 DE 10149200
(43) Veröffentlichungstag der Anmeldung: 09.04.2003
(73) Patentinhaber: Bayerische Motoren Werke Aktiengesellschaft, 80809 München (DE)
(72) Erfinder: Klaus, Wolfgang, 85416 Langenbach (DE)

(56) Entgegenhaltungen:
- EP-A- 0 353 494
- DE-A- 19 902 218
- GB-A- 209 622
- PATENT ABSTRACTS OF JAPAN vol. 2000, no. 06, 22. September 2000 (2000-09-22) -& JP 2000 085632 A (SUZUKI MOTOR CORP), 28. März 2000 (2000-03-28)

## Beschreibung

Die Erfindung betrifft eine Radhausschale mit Spritzwasserschutz gemäß des Oberbegriffs des Patentanspruchs 1.

Eine solche Radhausschale ist aus dem dokument JP,A,2000085632 bekannt.

Auf nassen Fahrbahnen wird durch die Reifen eines Kraftfahrzeugs üblicherweise die Nässe aufgewirbelt. Diese Gischtfahnen führen nachteiligerweise zu einer starken Verschmutzung des Fahrzeugs entlang der Kotflügel und behindern erheblich die Sicht für nachfolgende Fahrzeuge. Zur Vermeidung bzw. Reduzierung dieser Gischt sind aus dem Stand der Technik bereits mannigfache Konstruktionen insbesondere für Lastkraftwagen bekannt.

So ist aus der GB 2 165 508 A ein Spritzwasserschutz zur Anbringung oberhalb der Räder von Lastwägen bekannt, der sich zumindest an einem Ende nach unten erstreckt. Der Spritzwasserschutz weist auf der den Rädern zugewandten Seite parallele Rillen auf, die bevorzugt V-förmig sind. Nachteiligerweise beansprucht dieser Spritzwasserschutz aufgrund der Rillen relativ viel Bauraum. Dieser Bauraum steht bei Personenkraftfahrzeugen meist nicht zur Verfügung, sodass dieser Spritzwasserschutz nicht eingesetzt werden kann.

Der Erfindung liegt die Aufgabe zugrunde, eine Radhausschale für ein Personenkraftfahrzeug zu schaffen, die trotz des geringen zur Verfügung stehenden Bauraums einen wirkungsvollen Spritzwasserschutz bildet.

Diese Aufgabe wird durch die Merkmale des Patentanspruchs 1 gelöst.

Kerngedanke der Erfindung ist es, dass die Radhausschale in der Nähe zur Fahrzeugaußenseite und im Aübenren Bereich des Radhauses einen einzigen, entlang der Abwicklung der Radhausschale verlaufenden, radial nach außen zurückversetzten Wassersammelkanal aufweist. Der Wassersammelkanal sammelt einen Teil des im Radhaus verwirbelten Wassers und leitet es zur Fahrzeugunterseite hin ab. Dadurch verringern sich die Gischtmengen, die das Radhaus seitlich verlassen. Das Fahrzeug verschmutzt so deutlich weniger und die Verkehrssicherheit für die anderen Verkehrsteilnehmer erhöht sich, da für sie die Sicht besser ist. Durch die Anordnung eines einzigen Wassersammelkanals in der Nähe zur Fahrzeugaußenseite wird nur im äußeren Bereich des Radhauses zusätzlicher Bauraum benötigt. Dieser Bereich ist bei einem Personenkraftwagen normalerweise der vom Bauraum her unkritischste Bereich. Er kann sogar zwischen der inneren und äußeren Fahrzeugaußenwand zum Liegen kommen, wo sich ansonsten sowieso nur ein ungenutzter Hohlraum befindet. Die erfindungsgemäße Radhausschale ist praktisch ohne Mehrkosten im Vergleich zu einer konventionellen Radhausschale ohne zusätzlichen Spritzwasserschutz herstellbar. Die Integration des Wassersammelkanals in die Radhausschale stellt auch technisch kein Problem dar, sodass es leicht umgesetzt werden kann.

Die Radhausschale ist häufig mit einem Verbindungsflansch mit einem angrenzenden Kotflügel verbunden. Idealerweise ist dann der Wassersammelkanal in Fahrzeugquerrichtung neben dem Verbindungsflansch angeordnet. Dadurch kann die äußere Seitenwand des Wassersammelkanals so gestaltet werden, dass sie in der Verlängerung zugleich den Flanschabschnitt zur Verbindung mit dem Kotflügel bildet. Dies vereinfacht die Gestaltung der Radhausschale.

Aufgrund des geringen zur Verfügung stehenden Bauraums und aus Gewichtsgründen weist die Radhausschale möglichst dünne Wandstärken auf. Dadurch wird die Radhausschale relativ instabil. Vorteilhafterweise versteift der Wassersammelkanal die Radhausschale. So können auch bei dünnen Wandstärken unerwünschte Schwingungen oder Vibrationen vermieden werden.

Die Radhausschale besteht in einer günstigen Ausgestaltung aus Kunststoff, insbesondere aus einer Mischung aus Polypropylen mit EPDM. Im Gegensatz zu einer Radhausschale aus Blech ist eine aus Kunststoff nicht korrosionsgefährdet. Eine Radhausschale aus Kunststoff kann außerdem zugleich als ganzes Bauteil relativ steif gestaltet sein und dennoch punktuell weich sein, sodass sie auch bei Steinschlag nicht beschädigt wird. Als besonders geeigneter Kunststoff hat sich hierbei eine Mischung aus Polypropylen mit EPDM herausgestellt.

Zur Montage muss die Radhausschale angeliefert und im Radhaus befestigt werden. Die Abmessungen der Radhausschale und das damit verbundene Gewicht erschweren dabei erheblich die Handhabung. Idealerweise besteht die Radhausschale daher aus zumindest zwei Einzelteilen. Dies erleichtert erheblich die Montage. Die einzelnen Bauteile sind deutlich kleiner und leichter als eine einteilige Radhausschale und lassen sich so wesentlich besser montieren.

Neben dem Wassersammelkanal kann die Radhausschale vorteilhafterweise innen eine Gewebeeinlage aufweisen. Insbesondere Gewebeeinlagen mit einem sehr lockeren Gewebe nehmen in der Radhausschale viel Spritzwasser auf, das dann durch das Gewebe ebenfalls zur Fahrzeugunterseite hin ablaufen kann. Dies ist ein wirkungsvoller zusätzlicher Spritzwasserschutz, der allerdings zusätzlichen Bauraum benötigt und mit zusätzlichem Gewicht verbunden ist.

Weitere vorteilhafte Ausgestaltungen sind Gegenstand von Unteransprüchen.

Die Erfindung wird nachstehend unter Bezugnahme auf die anliegenden Figuren näher erläutert. Es zeigen in schematischer Darstellungsweise:
- **Fig.** 1: einen Querschnitt durch eine Radhausschale, wie sie aus dem Stand der Technik bereits bekannt ist, und
- **Fig.** 2: einen Querschnitt durch eine erfindungsgemäße Radhausschale.

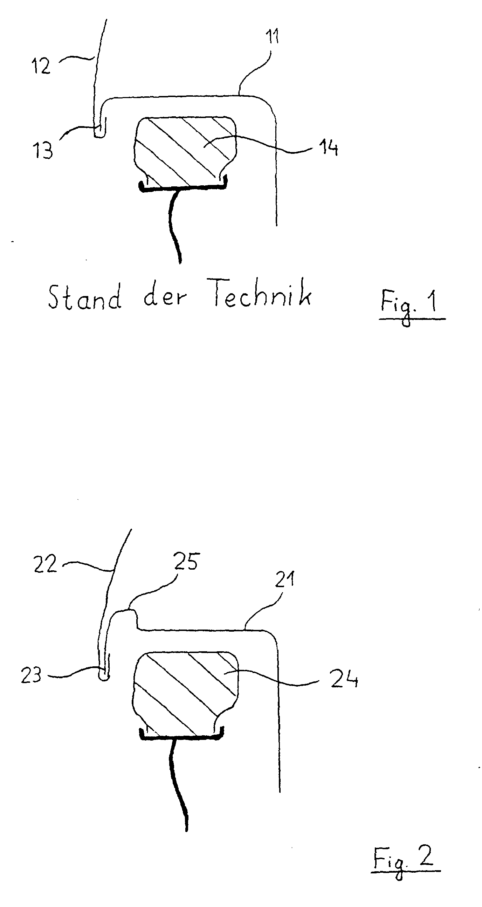

In **Fig.** 1 ist eine konventionelle Radhausschale 11 aus einer Mischung aus Polypropylen mit EPDM ohne Spritzwasserschutz dargestellt. Die Radhausschale 11 ist seitlich mit einem Kotflügel 12 über einen Verbindungsflansch 13 verbunden. Spritzwasser, das vom Reifen 14 aufgewirbelt wird, kann praktisch ungehindert das Radhaus seitlich verlassen.

Die erfindungsgemäße in **Fig.** 2 dargestellte einteilige Radhausschale 21 dagegen weist in Fahrzeugquerrichtung gesehen unmittelbar neben dem Verbindungsflansch 23 mit dem Kotflügel 22 einen U-förmigen Wassersammelkanal 25 auf. Der Wassersammelkanal 25 ist radial nach außen zurückversetzt und ist ca. 2 bis 3 cm breit. Die dem Kotflügel 22 zugewandte Seitenwand des Wassersammelkanals 25 ist nach unten verlängert und bildet zugleich den Flanschabschnitt für den Verbindungsflansch 23. Das Spritzwasser, das vom Reifen 24 aufgewirbelt wird, wird zumindest teilweise im Wassersammelkanal 25 gesammelt und zur Fahrzeugunterseite abgeführt. Dadurch treten nur geringe Mengen an Spritzwasser seitlich aus dem Radhaus aus. Aufgrund der geringeren Gischtmengen verschmutzt das Fahrzeug nur in deutlich geringerem Maße und die Sicht für nachfolgende Fahrzeuge ist wesentlich weniger eingeschränkt, als es bei der Radhausschale 11 aus **Fig.** 1 der Fall ist.

## Patentansprüche

1. Radhausschale mit Spritzwasserschutz, für ein Personenkraftfahrzeug, **dadurch gekennzeichnet, dass** die Radhausschale (**21**) in der Nähe zur Fahrzeugaußenseite und im Äuberen Bereich des Radhauses einen einzigen, entlang der Abwicklung der Radhausschale (**21**) verlaufenden, radial nach außen zurückversetzten Wassersammelkanal (**25**) aufweist.

2. Radhausschale nach Anspruch 1, **dadurch gekennzeichnet, dass** der Wassersammelkanal (**25**) in Fahrzeugquerrichtung neben einem Verbindungsflansch (**23**) der Radhausschale (**21**) mit einem angrenzenden Kotflügel (**22**) angeordnet ist.

3. Radhausschale nach einem der vorhergehenden Ansprüche, **dadurch gekennzeichnet, dass** der Wassersammelkanal (**25**) die Radhausschale (**21**) versteift.

4. Radhausschale nach einem der vorhergehenden Ansprüche, **dadurch gekennzeichnet, dass** die Radhausschale (**21**) aus Kunststoff, insbesondere aus einer Mischung aus Polypropylen mit EPDM, besteht.

5. Radhausschale nach einem der vorhergehenden Ansprüche, **dadurch gekennzeichnet, dass** die Radhausschale (**21**) aus zumindest zwei Einzelteilen besteht.

6. Radhausschale nach einem der vorhergehenden Ansprüche, **dadurch gekennzeichnet, dass** die Radhausschale (**21**) innen eine Gewebeeinlage aufweist.

7. Radhausschale nach einem der vorhergehenden Ansprüche, **dadurch gekennzeichnet, dass** der Wassersammelkanal (**25**) einen U-förmigen Querschnitt hat.

8. Radhausschale nach einem der vorhergehenden Ansprüche, **dadurch gekennzeichnet, dass** der Wassersammelkanal (**25**) ca. 2 bis 3 cm breit ist.

## Claims

1. A wheel-housing shell with a spray-water guard for a passenger vehicle, **characterised in that** the wheel-housing shell (21) has a single water-collecting channel (25) near the outside of the vehicle and in the outer region of the wheel housing, extending along the developed shape of the wheel-housing dish (21) and set back radially towards the exterior.

2. A wheel-housing shell according to claim 1, **characterised in that** the water-collecting channel (25) is disposed in the transverse direction of the vehicle near a flange (23) connecting the wheel-housing shell (21) to an adjoining mudguard (22).

3. A wheel-housing shell according to any of the preceding claims, **characterised in that** the water-collecting channel (25) reinforces the wheel-housing shell (21).

4. A wheel-housing shell according to any of the preceding claims, **characterised in that** the wheel-housing shell (21) is made of plastic, especially of a mixture of polypropylene and EPDM.

5. A wheel-housing shell according to any of the preceding claims, **characterised in that** the wheel-housing shell (21) comprises at least two individual parts.

6. A wheel-housing shell according to any of the preceding claims, **characterised in that** the wheel-housing shell (21) has an internal fabric insert.

7. A wheel-housing shell according to any of the preceding claims, **characterised in that** the water-collecting channel (25) has a U-shaped cross-section.

8. A wheel-housing shell according to any of the preceding claims, **characterised in that** the water-collecting channel (25) is about 2 to 3 cm wide.

## Revendications

1. Coquille de logement de roue comportant un élément anti-projections pour un véhicule de tourisme,
**caractérisée en ce que**
la coquille du logement de roue (21) comporte, à proximité du côté extérieur du véhicule, et dans la zone extérieure du logement de roue, un seul canal collecteur d'eau (25) passant le long du développement de la coquille de roue (21), et décalé radialement vers l'extérieur.

2. Coquille de logement de roue selon la revendication 1,
**caractérisée en ce que**
le canal collecteur d'eau (25) est prévu à côté de la bride de liaison (23) de la coquille (21), dans la direction transversale du véhicule, à côté de l'aile (22).

3. Coquille de logement de roue selon l'une des revendications précédentes,
**caractérisée en ce que**
le canal collecteur d'eau (25) rigidifie la coquille (21).

4. Coquille de logement de roue selon l'une des revendications précédentes,
**caractérisée en ce que**
la coquille (21) est en matière plastique, notamment en un mélange de polypropylène et de EPDM.

5. Coquille de logement de roue selon l'une des revendications précédentes,
**caractérisée en ce que**
la coquille (21) se compose d'au moins deux parties distinctes.

6. Coquille de logement de roue selon l'une des revendications précédentes,
**caractérisée en ce que**
la coquille (21) présente intérieurement un insert de tissu.

7. Coquille de logement de roue selon l'une des revendications précédentes,
**caractérisée en ce que**
le canal collecteur d'eau (25) a une section en forme de U.

8. Coquille de logement de roue selon l'une des revendications précédentes,
**caractérisée en ce que**
le canal collecteur d'eau (25) a une largeur de 2 à 3 cm.
